# EUROPEAN PATENT SPECIFICATION

(11) **EP 2 449 855 B1**
(45) Date of publication and mention of the grant of the patent: **17.04.2013**
(21) Application number: 10730250.7
(22) Date of filing: 22.06.2010
(51) Int. Cl.: H05B 33/08

(54) **DRIVER FOR COOPERATING WITH A WALL DIMMER**
TREIBER ZUR VERWENDUNG MIT EINEM WANDDIMMER
CIRCUIT D'ATTAQUE DESTINÉ À COOPÉRER AVEC UN GRADATEUR MURAL

(30) Priority: 29.06.2009 EP 09164026
(43) Date of publication of application: 09.05.2012
(73) Proprietor: Koninklijke Philips Electronics N.V., 5621 BA Eindhoven (NL)
(72) Inventor: VAN DER VEEKEN, Renatus, Willem, Clemens, NL-5656 AE Eindhoven (NL); KAHLMAN, Henricus, Marius, Joseph, Maria, NL-5656 AE Eindhoven (NL)
(74) Representative: Van Eeuwijk, Alexander Henricus Waltherus
(86) International application number: PCT/IB2010/052818
(87) International publication number: WO 2011/001327

(56) References cited:
- WO-A1-2005/115058
- WO-A1-2008/059308
- WO-A2-2006/120629
- US-A1- 2006 132 061
- US-A1- 2007 182 347

## Description

### FIELD OF THE INVENTION

The present invention relates in particular to a driver for driving light sources, especially LEDs, but the driver of the invention can be applied for driving any type of load.

### BACKGROUND OF THE INVENTION

In conventional lighting applications, incandescent lamps are used, which are based on resistive heating of an light-emitting element. The lamps are powered from mains, which in Europe involves 230 V AC at 50 Hz. Conventionally, such lamps are connected in series with an ON/OFF switch, so that the lamps are either off or produce light at a nominal power. To meet the demand of being able to dim the lamp, i.e. to reduce the light level, mains dimmers have been developed as a device being connected in series with the lamp, either as a separate device or integrated with the wall-mount switch. Such dimmers typically operate on the basis of phase-cutting the mains voltage, using a TRIAC. Since such dimmers are commonly known, the following description will be kept brief.

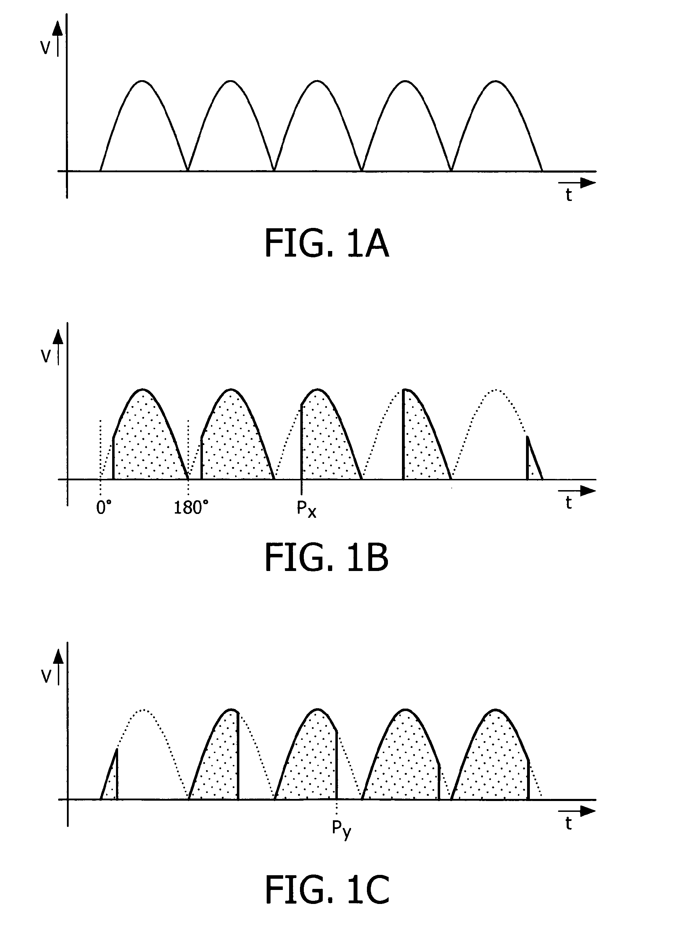

Figure 1A is a graph schematically showing voltage (vertical axis) versus time (horizontal axis) of rectified mains. It can be seen that this voltage follows a continuous sine-shaped curve, of which the negative portions are inverted. The power provided to a resistive load, expressed as P = U²/R, can be considered as being proportional to the surface area under the curve.

Figures 1B and 1C are comparable graphs showing the output voltage of phase-cutting dimmers, i.e. a leading edge dimmer (figure 1B) or a trailing edge dimmer (figure 1C). In the case of a leading edge dimmer (figure 1B), the output voltage is suppressed to remain zero immediately after a zero-crossing of the mains, until a certain phase p_{X} between 0 and 180° when the voltage makes a jump to follow the mains curve. Again, the power provided to a resistive load can be considered as being proportional to the surface area under the curve: it can be seen that this power is reduced when said phase p_{X} is increased (righthand side of the curve). In the case of a trailing edge dimmer (figure 1C), the voltage follows the mains after a zero-crossing until a certain phase p_{Y} between 0 and 180° when the voltage is suppressed to make a jump to zero. Again, the power provided to a resistive load can be considered as being proportional to the surface area under the curve: it can be seen that this power is reduced when said phase p_{Y} is decreased (lefthand side of the curve). The situation of figure 1B is indicated as "leading edge dimming" and the situation of figure 1C is indicated as "trailing edge dimming".

One problem with incandescent lamps is their low efficiency: much of their power consumption goes wasted in the form of heat. Alternative light sources have been developed with much higher efficiency, such as for instance gas discharge lamps, LEDs, OLEDs, etc. For producing the same amount of light, such light sources require much less electrical energy, for which reason they can be termed "energy-saving lamps". Such light sources can not be operated by direct connection to mains: they need to be driven by a driver device which in turn is powered from mains. Drivers include the CuFe ballast for TL lamps, but the present invention relates to electronic drivers. As will be commonly known to persons skilled in the art, such electronic drivers have been developed for on the one hand presenting a suitable load to mains (power factor correction) and on the other hand generating a suitable output current for the light source. The driver may be designed for controlling the current magnitude, but may also be designed for controlling the output power.

It is also desirable to be able to dim an energy-saving lamp, so dimmable electronic drivers have also been developed. Such driver has a user control input, typically wirelessly coupled to a remote control, via which a user may control the light intensity, i.e. dim the light source. In such case, dimming is performed by the driver, by reducing the output current intensity (amplitude) or reducing the PWM duty cycle of the lamp current.

"Normal" dimmable electronic drivers are intended for being powered from "normal" mains, i.e. a sine-shaped voltage of for instance 230 V 50 Hz in Europe. However, there are also situations where it is desirable to be able to dim the lamp by using a mains dimmer. Such situation may typically occur when an existing light source is replaced by a light source with integrated electronic driver, when the existing light source is for instance an incandescent lamp powered via a wall-mounted dimmer. Electronic drivers capable of receiving "dimmed" mains from a mains dimmer have also been developed: such drivers can be described as operating as normal drivers as far as generating current for the lamp is concerned, yet having the further facility of analysing the phase angle of the input mains and determining the dim level for the lamp on the basis of this information.

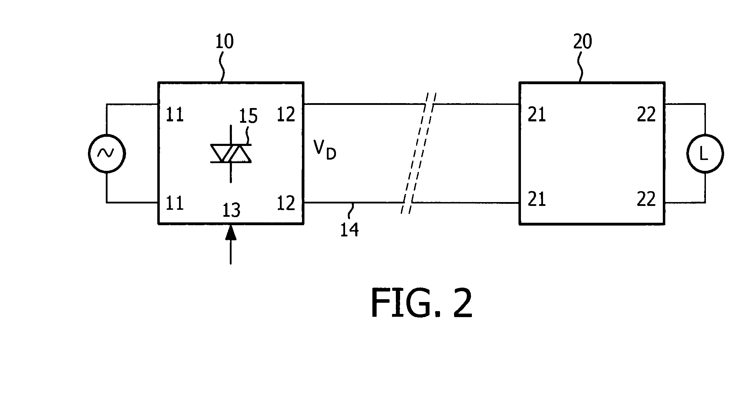

Figure 2 is a block diagram of a practical situation where an electronic lamp driver 20 is connected to "dimmed mains" provided by a mains dimmer 10 operating according to the above-described phase-cutting principle. The dimmer 10 has an input 11 receiving the original mains, and an output 12 providing dimmed mains V_{D}. The mains dimmer 10 has a user input 13 for controlling the dim level, typically a rotating knob. In a common situation, the mains dimmer 10 is wall-mounted while a lamp L supplied by the mains dimmer 10 is mounted relatively remote, illustrated by the long supply lines 14. The lamp L is provided with an electronic driver 20, either as a separate device or as a built-in device, having an input 21 connected to the supply lines 14 to receive the dimmed mains V_{D}, and having an output 22 connected to the actual light source of the lamp L.

### SUMMARY OF THE INVENTION

A problem in such circuit relates to the fact that the mains dimmer 10 comprises an output stage with a TRIAC 15. As should be known to a person skilled in the art, a TRIAC switches off when the current drops below a certain level indicated as hold current; this level may depend on the individual TRIAC. Consequently, the output current of the dimmer 10 is switched off before the voltage crosses zero. Further, a TRIAC needs a certain ignition current, also indicated as latching current, to switch on. All in all, basically, a mains dimmer only operates properly above a certain level of output current, and mains dimmers have typically been developed for a minimum output power of about 30 W. Energy-saving lamps typically consume less than 30 W, particularly in the case of lamps used in consumers' houses. When the lamps are dimmed, the problem only gets worse. The lamp may not start, the lamp may extinguish, the lamp may show erratic behaviour and visible flickering and audible humming, etc. This is obviously unacceptable to the users and hinders the acceptance of energy-saving lamps.

An object of the present invention is to overcome or at least reduce the above problems.

In one embodiment, the present invention provides an electronic driver for cooperating with a mains dimmer. The driver generates duty cycle controlled current for the lamp, which means that the lamp current is switched on and off while the ratio between ON-time and current period determines the average output current and hence the average output light. During those periods when the lamp current is off, an auxiliary impedance is coupled to the mains such as to draw a current from the mains dimmer to satisfy the requirements for maintaining the TRIAC.

In another embodiment, the present invention provides an electronic driver for cooperating with a mains dimmer. The driver generates high-frequency lamp current during those periods when the mains voltage is higher than zero. During those periods when the mains voltage is zero, an auxiliary impedance is coupled to the mains such as to draw a current from the mains dimmer to satisfy the requirements for maintaining the TRIAC. Further advantageous elaborations are mentioned in the dependent claims.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
figures 1A-1C are graphs schematically showing voltage versus time;
figure 2 is a block diagram of an electronic lamp driver connected to a mains dimmer;
figure 3 is a block diagram schematically illustrating one embodiment of an electronic driver according to the present invention;
figure 4 is a block diagram schematically illustrating a second embodiment of an electronic driver according to the present invention.

### DETAILED DESCRIPTION OF THE INVENTION

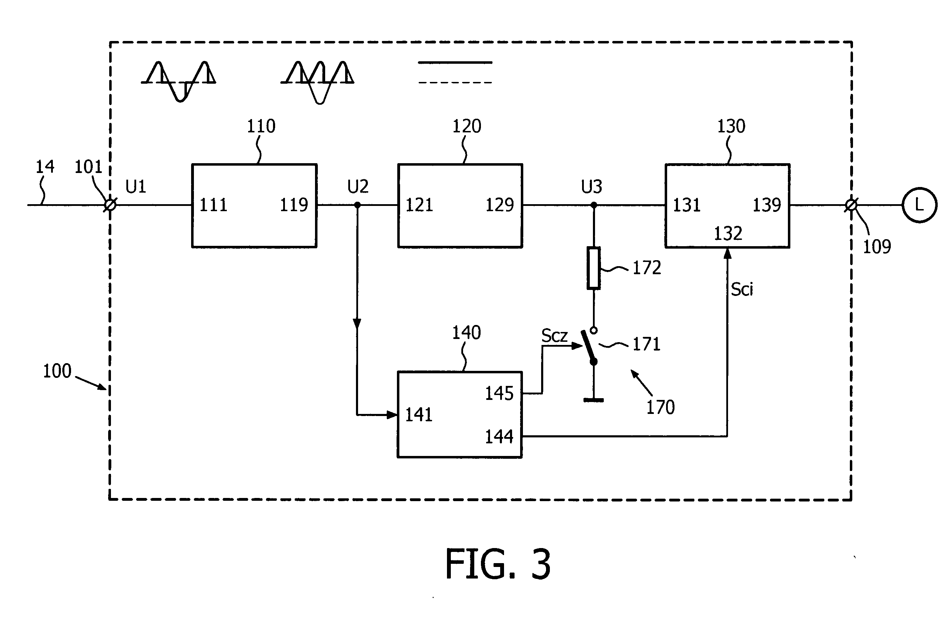

Figure 3 is a block diagram schematically illustrating one embodiment of an electronic driver 100 according to the present invention. The driver 100 has an input 101 1 for receiving phase-cut mains U1 from a mains dimmer (not shown), and has an output 109 for connecting to a lamp L.

A rectifier 110 has an input 111 connected to the driver input 101, and has an output 119 for providing rectified mains U2. The rectifier 110 may for instance be implemented as a diode bridge. It is noted that rectified mains U2 has basically the same wave form as mains U1, with the exception that the polarity of all current half-periods is now the same. Since rectifiers are commonly known to persons skilled in the art, a more detailed discussion of design and operation of the rectifier 110 is not needed here.

A DC/DC converter 120 has an input 121 connected to the rectifier output 119, and has an output 129 for providing substantially constant output voltage U3. Since DC/DC converters are commonly known to persons skilled in the art, a more detailed discussion of design and operation of the DC/DC converter 120 is not needed here.

A controllable interruptor 130 has an input 131 connected to the DC/DC converter output 129, and has its output 139 connected to the driver output 109. The interruptor 130 has two operative states, i.e. a conductive state and a non-conductive state. The interruptor 130 has a control input 132 and is responsive to a control signal received at this control input to operate either in its conductive state or in its non-conductive state. In a simple embodiment, the interruptor 130 may be implemented as a switch. It should be clear that the lamp L is receiving lamp current or not, depending on the operative state of the interruptor 130.

A control device 140 has an input 141 coupled to the rectifier output 119, and has a first output 144 for providing a first control signal Sci to control input 132 of the interruptor 130. For reducing the voltage level at the input 141, the control device 140 may be provided with a resistive voltage divider (not shown), as should be clear to a person skilled in the art. The control device 140, which may be implemented for instance as a suitably programmed controller or microprocessor, is designed to generate its first control signal Sci as a binary signal having one of two possible values, which for simplicity will be indicated as high or low, respectively. If the signal has a first value, for instance high, the interruptor 130 is in its conductive state; if the signal has the second value, for instance low, the interruptor 130 is in its non-conductive state. Switching between the two signal values is assumed to be executed at a constant switching frequency f, although this is not essential. The exact value of this frequency is not important for implementing the present invention, but may typically be in the range of 1 kHz or higher. It should be clear that this switching frequency f determines the frequency of the lamp output current frequency. A lamp current period T is defined as T = 1/f. In each current period, the current is ON for a certain duration t1 and OFF for a certain duration t2, with t1 + t2 = T. A duty cycle Δ is defined as Δ = t1/T. The duty cycle can basically be varied between 0% and 100%, and determines the average current level and average output light level.

As explained above, the phase angle of the cutting of the mains determines the required output light level. Thus, the control device 140 is designed to analyse the signal received at its input 141, and to set the duty cycle Δ of its first control signal Sci in relation to the phase cut angle of the mains signal received at its input 141.

During t2, the interruptor 130 is not providing any current to the lamp L and thus is not drawing any current from mains U1. As explained above, this might lead to problems with the mains dimmer. According to the present invention, these problems are avoided by a switchable auxiliary load 170 connected between the DC/DC converter output 129 and ground. The switchable load 170 may suitably be implemented as a series arrangement of an auxiliary impedance 172 and a controllable switch 171.

The control device 140 has a second output 145 for providing a second control signal Scz for a control input of the controllable switch 171, which may for instance be implemented as a FET. The switch 171 has two operative states, i.e. a conductive state and a non-conductive state. The second control signal Scz is generated as the inverted first control signal Sci, so that the switch 171 is in its conductive state when the interruptor 130 is in its non-conductive state and vice versa. Thus, as an alternative, the second control signal Scz may be provided by an inverter receiving the first control signal Sci as input signal.

As a result, the auxiliary impedance 172 is drawing a current from mains during t2 when the lamp L is not drawing any current, such as to assure a minimum current for the TRIAC in the mains dimmer. The auxiliary impedance 172 can for instance be a resistor, and its value depends among other things on the nominal lamp power and on the characteristics of the mains dimmers to be expected. By way of example, in a suitable embodiment, for a case where U3 is about 400 V and the lamp L has a nominal power of 20 W, a resistance value of 50 kΩ is sufficient.

It is noted that the auxiliary impedance 172 is only drawing a current from mains during dimming; if the lamp is operated at a duty cycle of 100% (full nominal power), no extra losses are introduced.

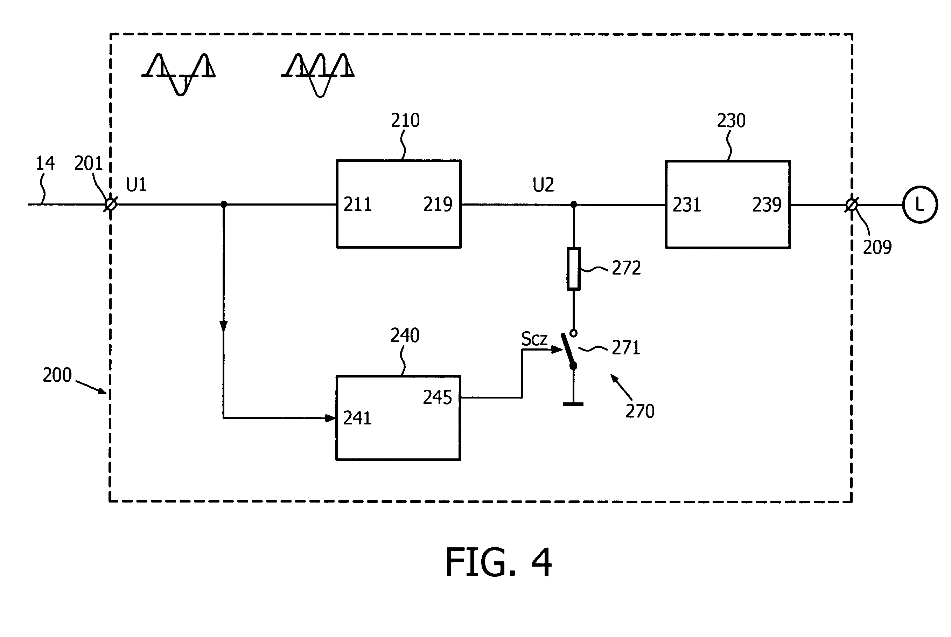

Figure 4 is a block diagram schematically illustrating a second embodiment of an electronic driver 200 according to the present invention. The driver 200 has an input 201 for receiving phase-cut mains U1 from a mains dimmer (not shown), and has an output 209 for connecting to a lamp L.

A rectifier 210 has an input 211 connected to the driver input 101, and has an output 219 for providing rectified mains U2. The rectifier 210 may for instance be implemented as a diode bridge. It is noted that rectified mains U2 has basically the same wave form as mains U1, with the exception that the polarity of all current half-periods is now the same. Since rectifiers are commonly known to persons skilled in the art, a more detailed discussion of design and operation of the rectifier 210 is not needed here.

An inverter 230 has an input 231 connected to the rectifier output 219, and has its output 239 connected to the driver output 209. The inverter 230 is capable of generating an alternating output current, typically by commutating its input voltage. In an embodiment, the inverter 230 may have a full-bridge design, as known per se. It should be clear that the inverter 230 is only providing lamp current when the mains voltage is present, so there is no current when the mains voltage is cut. Thus, the average lamp current and hence the average light output depends on the phase cut angle.

Since there is no lamp current when the mains voltage is cut, this might lead to problems with the mains dimmer, as explained above. According to the present invention, these problems are avoided by a switchable auxiliary load 270 connected between the rectifier output 219 and ground. The switchable load 270 may suitably be implemented as a series arrangement of an auxiliary impedance 272 and a controllable switch 271. The switch 271 has two operative states, i.e. a conductive state and a non-conductive state. For controlling the switch 271, the driver 200 further comprises a control device 240 having an output 245 for providing a control signal Scz for a control input of the controllable switch 271, which may for instance be implemented as a FET.

The control device 240 has an input 241 coupled to the driver input 201. For reducing the voltage level at the input 241, the control device 240 may be provided with a resistive voltage divider (not shown), as should be clear to a person skilled in the art. The control device 240, which may be implemented for instance as a suitably programmed controller or microprocessor, is designed to generate its control signal Scz as a binary signal having one of two possible values, which for simplicity will be indicated as high or low, respectively. If the signal has a first value, for instance high, the switch 271 is in its conductive state; if the signal has the second value, for instance low, the switch 271 is in its non-conductive state.

The control device 240 is designed to analyse the signal received at its input 241, and to detect the zero-crossings in the dimmed mains U1. The control device 240 is designed to generate its output control signal Scz such that it becomes high when the dimmed mains U1 becomes zero or somewhat earlier, and such that it becomes low when the dimmed mains U1 rises from zero or somewhat later. As a result, the auxiliary impedance 272 is drawing a current from mains during those time periods when the lamp L is not drawing any current, such as to assure a minimum current for the TRIAC in the mains dimmer.

The auxiliary impedance 272 can for instance be a resistor, and its value depends among other things on the nominal lamp power and on the characteristics of the mains dimmers to be expected. By way of example, in a suitable embodiment, for a case with 230 V mains and a lamp L having a nominal power of 20 W, a resistance value of 15 kΩ is sufficient.

It is noted that the auxiliary impedance 272 is only drawing a current from mains during dimming; if the lamp is operated at a duty cycle of 100% (full nominal power), no extra losses are introduced.

Summarizing, the present invention provides a driver 100; 200 for driving a dimmable load L, which driver is powered from phase-cut mains U1 and determines the dimming state of the load on the basis of the phase of the cutting of the mains.

The driver comprises:
a load current generating device 130; 230 generating load current;
a controllable auxiliary load 170; 270 connected to an input 131; 231 of the load current generating device;
a control device 140; 240 controlling the auxiliary load.

The control device has an input 141; 241 receiving a signal indicating the momentary voltage at the driver input.

The load current generating device generates interrupted current pulses, so that the average output current corresponds to the dim command reflected by the phase cutting angle of the input mains.

The control device switches the auxiliary load on during those time periods when the output current generated by the load current generating device is zero.

An advantage of the present invention is that it assures some current to be drawn from the dimmer. This will assure that timing components in the dimmer, typically capacitors, which require current to be charged or discharged, can function properly.

While the invention has been illustrated and described in detail in the drawings and foregoing description, it should be clear to a person skilled in the art that such illustration and description are to be considered illustrative or exemplary and not restrictive. The invention is not limited to the disclosed embodiments; rather, several variations and modifications are possible within the protective scope of the invention as defined in the appending claims.

For instance, in stead of a lamp L the driver may drive another dimmable load.

In the embodiment of figure 3, the controller input 141 is shown as being coupled to the output 119 of the rectifier 110 in order to receive phase angle timing information; alternatively, the controller input 141 might be coupled to the rectifier input 111, since input voltage U1 also contains this information: this alternative is shown in the embodiment of figure 4. Conversely, for similar reasoning, the controller input 241 in the embodiment of figure 4 might be coupled to the rectifier output 219.

In the embodiment of figure 4, device 230 is implemented as an inverter, generating high frequency current as long as it receives input voltage, whereas in the embodiment of figure 3, the device 130 is implemented as a duty cycle controlled interruptor, generating interrupted current wherein the interruptions are controlled by controller 140. It is also possible to combine these teachings: in the embodiment of figure 3, the device 130 may be implemented as a duty cycle controlled inverter, generating interrupted current wherein the interruptions are controlled by controller 140 and wherein the current is high frequency current (for instance about 45 kHz). Such duty cycle controlled inverter may be capable of operating in two operative states: in a first state, the inverter is off and generates no current, while in a second state the inverter is on and generates high frequency current. The inverter is responsive to a control signal Sci from the controller 140 to be either on or off.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

In the above, the present invention has been explained with reference to block diagrams, which illustrate functional blocks of the device according to the present invention. It is to be understood that one or more of these functional blocks may be implemented in hardware, where the function of such functional block is performed by individual hardware components, but it is also possible that one or more of these functional blocks are implemented in software, so that the function of such functional block is performed by one or more program lines of a computer program or a programmable device such as a microprocessor, microcontroller, digital signal processor, etc.

## Claims

1. Driver (100; 200) for driving a dimmable load (L), the driver being designed for being powered from phase-cut mains (U1) and to determine the dimming state of the load on the basis of the phase of the cutting of the mains;
the driver having an input (101; 201) for connection to a supply line (14) and an output (109; 209) for connection to the dimmable load (L), the driver comprising:
- converting means (110, 120) for converting the input mains (U1) to a constant DC voltage (U3);
- a controllable inverter (130; 230) for generating load current, having an input (131) coupled to an output (129) of the converting means (110, 120), having an output (139; 239) coupled to the driver output (109; 209), and having a control input (132), the inverter being capable of operating in an active state in which it outputs high frequency current and being capable of operating in an off state in which it does not generate current;
- a controllable auxiliary load (170; 270) connected to an input (131; 231) of the load current generating device (130; 230);
- a control device (140; 240) for controlling the auxiliary load (170; 270) and the inverter (130; 230), the control device (140) having an input (141; 241) coupled to receive a signal indicating the momentary voltage at the driver input (101; 201), a first control output (144) for providing a first control signal (Sci) to the control input (132) of the inverter (130) and a second control output (145) for providing a second control signal (Scz) to a control input of the controllable auxiliary load (170);
wherein the control device (140) is designed to generate its first control signal (Sci) such as to cause the inverter (130) to be alternating between its active state for a first time duration (t1) and its off state for a second time duration (t2);
wherein the control device (140) is designed to set the ratio between the first time duration (t1) and the second time duration (t2) on the basis of the phase cutting angle information in the rectified mains (U2), so that the average output current corresponds to the dim command reflected by the phase cutting angle of the input mains (U1);
and wherein the control device (140; 240) is designed to generate its second control signal (Scz) as an inverted first control signal (Sci) so that the auxiliary load (170) is switched on during said off state and off during said active state.

2. Driver according to claim 1, wherein the auxiliary load (170; 270) is a series arrangement of an impedance (172; 272) and a controllable switch (171; 271).

3. Driver according to claim 2, wherein the impedance (172; 272) comprises a resi stor.

4. Driver according to claim 1, wherein the converting means (110, 120) comprise:
a rectifier (110) having an input (111) connected to the driver input (101), and an output (119) for providing rectified mains (U2);
a DC/DC converter (120) having an input (121) connected to the rectifier output (119), and an output (129) for providing substantially constant output voltage (U3);
wherein the load current generating inverter (130) has its input (131) coupled to the output (129) of the converting means (120).

5. Driver according to claim 4, wherein the control device (140) has an input (141) coupled to the rectifier output (119), preferably via a resistive divider, or wherein the control device (140) has an input (141) coupled to the rectifier input (111), preferably via a resistive divider.

6. Driver according to claim 1, wherein the control device (240) has an input (241) coupled to the rectifier output (219), preferably via a resistive divider, or wherein the control device (240) has an input (241) coupled to the rectifier input (211), preferably via a resistive divider, for receiving a signal representing phase-cut mains (U1; U2);
wherein the control device (240) is designed to monitor the zero-crossings of the phase-cut mains (U1; U2), and to switch on the auxiliary load (270) when the phase-cut mains (U1; U2) is approaching zero and to switch off the auxiliary load (270) when the phase-cut mains (U1) is rising from zero.

## Patentansprüche

1. Treiber (100; 200) zur Ansteuerung einer dimmbaren Last (L), wobei der Treiber so ausgeführt ist, dass er aus einem Phasenanschnittsnetz (U1) gespeist wird und den Dimmungszustand der Last aufgrund der Phase des Trennens des Netzes ermittelt; wobei der Treiber einen Eingang (101; 201) zum Anschluss an eine Versorgungsleitung (14) sowie einen Ausgang (109; 209) zum Anschluss an die dimmbare Last (L) aufweist, wobei der Treiber umfasst:
- Umwandlungsmittel (110, 120), um die Eingangsnetzspannung (U1) in eine konstante Gleichspannung (U3) umzuwandeln;
- einen steuerbaren Wechselrichter (130; 230) zur Erzeugung von Laststrom, mit einem mit einem Ausgang (129) der Umwandlungsmittel (110; 120) gekoppelten Eingang (131), einem mit dem Treiberausgang (109; 209) gekoppelten Ausgang (139; 239) sowie einem Steuereingang (132), wobei der Wechselrichter imstande ist, in einem aktiven Zustand zu arbeiten, in dem er Hochfrequenzstrom abgibt und imstande ist, in einem AUS-Zustand zu arbeiten, in dem er keinen Strom erzeugt;
- eine steuerbare Hilfslast (170; 270), die mit einem Eingang (131; 231) der Laststromerzeugungseinrichtung (130; 230) verbunden ist;
- eine Steuereinrichtung (140; 240) zur Steuerung der Hilfslast (170; 270) und des Wechselrichters (130; 230), wobei die Steuereinrichtung (140) einen Eingang (141; 241), der so geschaltet ist, dass er ein die augenblickliche Spannung an dem Treibereingang (101; 201) anzeigendes Signal empfängt, einen ersten Steuerausgang (144) zum Zuführen eines ersten Steuersignals (Sci) zu dem Steuereingang (132) des Wechselrichters (130) sowie einen zweiten Steuerausgang (145) zum Zuführen eines zweiten Steuersignals (Scz) zu einem Steuereingang der steuerbaren Hilfslast (170) aufweist;
wobei die Steuereinrichtung (140) so ausgeführt ist, dass sie ihr erstes Steuersignal (Sci) erzeugt, um zu bewirken, dass der Wechselrichter (130) zwischen seinem aktiven Zustand für eine erste Zeitdauer (t1) und seinem AUS-Zustand für eine zweite Zeitdauer (t2) wechselt;
wobei die Steuereinrichtung (140) so ausgeführt ist, dass sie das Verhältnis zwischen der ersten Zeitdauer (t1) und der zweiten Zeitdauer (t2) auf der Grundlage der Phasenanschnittswinkelinformationen in dem gleichgerichteten Netz (U2) einstellt, so dass der durchschnittliche Ausgangsstrom dem von dem Phasenanschnittswinkel der Eingangsnetzspannung (U1) reflektierten Dimmungsbefehl entspricht;
und wobei die Steuereinrichtung (140; 240) so ausgeführt ist, dass sie ihr zweites Steuersignal (Scz) als ein invertiertes erstes Steuersignal (Sci) erzeugt, so dass die Hilfslast (170) während des AUS-Zustands eingeschaltet und während des aktiven Zustands ausgeschaltet wird.

2. Treiber nach Anspruch 1, wobei die Hilfslast (170; 270) eine Reihenanordnung aus einer Impedanz (172; 272) und einem steuerbaren Schalter (171; 271) ist.

3. Treiber nach Anspruch 2, wobei die Impedanz (172; 272) einen Widerstand umfasst.

4. Treiber nach Anspruch 1, wobei die Umwandlungsmittel (110; 120) umfassen:
einen Gleichrichter (110) mit einem mit dem Treibereingang (101) verbundenen Eingang (111) sowie einem Ausgang (119), um die gleichgerichtete Netzspannung (U2) vorzusehen;
einen DC/DC-Wandler (120) mit einem mit dem Gleichrichterausgang (119) verbundenen Eingang (121) sowie einem Ausgang (129), um eine im Wesentlichen konstante Ausgangsspannung (U3) vorzusehen;
wobei der Eingang (131) des den Laststrom erzeugenden Wechselrichters (130) mit dem Ausgang (129) der Umwandlungsmittel (120) gekoppelt ist.

5. Treiber nach Anspruch 4, wobei die Steuereinrichtung (140) einen Eingang (141) aufweist, der, vorzugsweise über einen Widerstandsteiler, mit dem Gleichrichterausgang (119) gekoppelt ist, oder wobei die Steuereinrichtung (140) einen Eingang (141) aufweist, der, vorzugsweise über einen Widerstandsteiler, mit dem Gleichrichtereingang (111) gekoppelt ist.

6. Treiber nach Anspruch 1, wobei die Steuereinrichtung (240) einen Eingang (241) aufweist, der, vorzugsweise über einen Widerstandsteiler, mit dem Gleichrichterausgang (219) gekoppelt ist, oder wobei die Steuereinrichtung (240) einen Eingang (241) aufweist, der, vorzugsweise über einen Widerstandsteiler, mit dem Gleichrichtereingang (211) gekoppelt ist;
wobei die Steuereinrichtung (240) so ausgeführt ist, dass sie die Nulldurchgänge der Phasenanschnittsnetzspannung (U1, U2) überwacht und auf die Hilfslast (270) umschaltet, sobald sich die Phasenanschnittsnetzspannung (U1, U2) Null nähert, und die Hilfslast (270) abschaltet, sobald die Phasenanschnittsnetzspannung (U1) von Null ansteigt.

## Revendications

1. Circuit d'attaque (100 ; 200) destiné à attaquer une charge atténuable (L), le circuit d'attaque étant conçu pour être alimenté par un réseau électrique à coupure de phase (U1) et pour déterminer l'état d'atténuation de la charge sur la base de la phase de la coupure du réseau électrique ; le circuit d'attaque comprenant une entrée (101 ; 201) destinée à le connecter à une ligne d'alimentation (14) et une sortie (109 ; 209) destinée à le connecter avec la charge atténuable (L), le circuit d'attaque comprenant :
- un dispositif de conversion (110 ; 120) destiné à convertir le réseau électrique entrant (U1) à une tension de CC constante (U3) ;
- un onduleur commandable (130 ; 230) destiné à générer un courant de charge et comprenant une entrée (131) couplée à une sortie (129) du dispositif de conversion (110 ; 120), comprenant une sortie (139 ; 239) couplée à la sortie (109 ; 209) du circuit d'attaque, et comprenant une entrée de commande (132), l'onduleur étant capable de fonctionner dans un état activé dans lequel il fait sortir du courant à haute fréquence et étant capable de fonctionner dans un état désactivé dans lequel il ne génère aucun courant ;
- une charge auxiliaire commandable (170 ; 270) connectée à une entrée (131 ; 231) du dispositif de génération de courant de charge (130 ; 230) ;
- un dispositif de commande (140 ; 240) destiné à commander la charge auxiliaire (170 ; 270) et l'onduleur (130 ; 230), le dispositif de commande (140) comprenant une entrée (141 ; 241) couplée destinée à recevoir un signal indiquant la tension instantanée au niveau de l'entrée du circuit d'attaque (101 ; 201), une première sortie de commande (144) destinée à fournir un premier signal de commande (Sci) à l'entrée de commande (132) de l'onduleur (130) et une seconde sortie de commande (145) destinée à fournir un second signal de commande (Scz) à une entrée de commande de la charge auxiliaire commandable (170) ;
dans lequel le dispositif de commande (140) est conçu pour générer son premier signal de commande (Sci) de sorte que l'onduleur (130) alterne entre son état activé pour un premier laps de temps (t1) et état désactivé pour un deuxième laps de temps (t2) ;
dans lequel le dispositif de commande (140) est conçu pour établir le ratio entre le premier laps de temps (t1) et le second laps de temps (t2) de sorte que le courant de sortie moyen correspond à l'instruction d'atténuation reflétée par l'angle de coupure de phase du réseau électrique d'entrée (U1) ;
et dans lequel le dispositif de commande (140 ; 240) est conçu pour générer son second signal de commande (Scz) qui est un premier signal de commande (Sci) inversé, de sorte que la charge auxiliaire (170) est allumée pendant ledit état désactivé et est éteinte pendant ledit état activé.

2. Circuit d'attaque selon la revendication 1, dans lequel la charge auxiliaire (170 ; 270) est un agencement en série d'une impédance (172 ; 272) et d'un commutateur commandable (171 ; 271).

3. Circuit d'attaque selon la revendication 2, dans lequel l'impédance (172 ; 272) comprend une résistance.

4. Circuit d'attaque selon la revendication 1, dans lequel le dispositif de conversion (110 ; 120) comprend :
un redresseur de courant (110) avec une entrée (111) connectée à l'entrée (101) du circuit d'attaque, et une sortie (119) destiné à fournir le réseau électrique redressé (U2) ;
un onduleur CC/CA (120) avec une entrée (121) connectée à la sortie (119) du redresseur de courant et une sortie (129) pour fournir une tension de sortie (U3) sensiblement constant ;
dans lequel l' entrée (131) de l' onduleur de génération de courant de charge (130) est couplée à la sortie (129) du dispositif de conversion (120).

5. Circuit d'attaque selon la revendication 4, dans lequel une entrée (141) du dispositif de commande (140) est couplée à la sortie (119) du redresseur de courant, de préférence au moyen d'un diviseur résistif, ou dans lequel une entrée (141) du dispositif de commande (140) est couplée à l'entrée (111) du redresseur de courant, de préférence au moyen d'un diviseur résistif.

6. Circuit d'attaque selon la revendication 1, dans lequel une entrée (241) du dispositif de commande (240) est couplée à la sortie (219) du redresseur de courant, de préférence au moyen d'un diviseur résistif, ou dans lequel une entrée (241) du dispositif de commande (240) est couplée à l'entrée (211) du redresseur de courant, de préférence au moyen d'un diviseur résistif, afin de recevoir un signal représentant le réseau électrique à coupure de phase (U1 ; U2) ;
dans lequel le dispositif de commande (240) est conçu pour contrôler les passages par zéro du réseau électrique à coupure de phase (U1 ; U2) et allumer la charge auxiliaire (270) lorsque le réseau électrique à coupure de phase (U1 ; U2) approche de zéro ainsi que pour éteindre la charge auxiliaire (270) lorsque le réseau électrique à coupure de phase (U1) part de zéro vers les positifs.
